# EUROPEAN PATENT APPLICATION

(11) **EP 4 845 300 A1**
(43) Date of publication of application: **25.11.2026**
(21) Application number: 25751152.7
(22) Date of filing: 20.01.2025
(51) Int. Cl.: H04W 84/06, H04W 16/18

(54) **COMMUNICATION METHOD AND COMMUNICATION APPARATUS**

(30) Priority: 06.02.2024 CN 202410171494
(71) Applicant: Huawei Technologies Co., Ltd., Shenzhen, Guangdong 518129 (CN)
(72) Inventor: QIAO, Yunfei, Shenzhen, Guangdong 518129 (CN); WANG, Jun, Shenzhen, Guangdong 518129 (CN)
(74) Representative: Huawei European IPR
(86) International application number: PCT/CN2025/073361
(87) International publication number: WO 2025/167550

(57) **Abstract**

This application provides a communication method and a communication apparatus. The method includes: A first network entity receives second request information, where the second request information is used to request a first operation sequence; and determines the first operation sequence based on the second request information, where the first operation sequence indicates at least one processing operation and an execution order of the at least one processing operation, the first operation sequence is used to execute a first core network service, and the first network entity is deployed on a first satellite and/or a second satellite. It is considered that a payload capability of the satellite is limited. The network entity is deployed to replace different core network elements, thereby reducing deployment complexity of a satellite-borne core network. In addition, a core network service requested by a terminal device can be implemented through the network entity, and does not need to be completed through coordination of core network elements on a plurality of satellites. This avoids context migration caused by an unstable network topology, reduces communication latency, and improves quality of service.

## Description

This application claims priority to Chinese Patent Application No. 202410171494.3, filed with the China National Intellectual Property Administration on February 6, 2024 and entitled "COMMUNICATION METHOD AND COMMUNICATION APPARATUS", which is incorporated herein by reference in its entirety.

### TECHNICAL FIELD

This application relates to satellite networks, and more specifically, to a communication method and a communication apparatus.

### BACKGROUND

Non-terrestrial networks (non-terrestrial networks, NTN), for example, satellite communication networks, offer significant advantages including global coverage, long-distance transmission, flexible networking, convenient deployment, and independence from geographical constraints. Accordingly, NTNs have been widely used in various fields including maritime communication, positioning and navigation, disaster relief, scientific experiments, video broadcasting, and earth observation.

In a satellite communication system, to reduce latency caused by a round-trip of core network signaling between a satellite and the ground, core network elements may be deployed on a satellite platform, to provide core network services for users. However, because a satellite network topology structure may dynamically change, a serving satellite of the users may change. In such cases, a core network element deployed on an original serving satellite needs to migrate contexts of the users to a core network element deployed on a target serving satellite, so that the core network element deployed on the target serving satellite provides core network services for the users. Since the satellite network topology structure changes frequently, and inter-satellite links are unstable, frequent user context migration causes high signaling overheads and a high probability of context errors, affecting quality of service.

Therefore, there is an urgent need to address how to reduce a frequency of context migration between core network elements and improve quality of service.

### SUMMARY

This application provides a communication method. A core network function may be deployed on a satellite, so that a core network service request of a user can be implemented through the satellite-borne core network function, thereby reducing core network communication latency.

According to a first aspect, a communication method is provided. The method may be performed by a first access network device, or may be performed by a chip or a circuit configured in the first access network device. This is not limited in this application.

The method includes: receiving first request information, where the first request information is used to request a first core network service; and sending second request information to a first network entity based on the first request information, where the second request information is used to request a first operation sequence, the first operation sequence indicates at least one processing operation and an execution order of the at least one processing operation, the first operation sequence is used to implement the first core network service, and the first network entity is deployed on a first satellite or a second satellite.

The first access network device is deployed on the first satellite.

The first core network service includes a network function that can be implemented by a core network element, for example, a registration function, a mobility management function, a session setup function, a session update function, an authorization function, or a user positioning function.

In this application, an access network device and a network entity that are deployed on a same satellite may exchange information through an interface, for example, an A1 interface.

Network entities deployed on different satellites may exchange information through an interface, for example, an A2 interface.

The at least one processing operation includes a processing operation that can be used to perform a single operation, for example, a context read/write operation, an authentication/authorization operation, a transmission configuration operation, or an assisted positioning operation.

The first operation sequence may include a plurality of processing operations that have a specific order. For example, an operation sequence that can be used to perform the session setup function may be: context read operation -> authentication/authorization operation -> policy generation operation -> transmission configuration operation -> context write operation. The operations performed according to this order can implement a logical function of session setup. The execution order may be a predefined order. This is merely an example for description, and no limitation is imposed.

That the first operation sequence is used to implement the first core network service may be understood as implementing a function of the first core network service, for example, implementing the registration function or the mobility management function, or may be understood as processing a procedure of the core network service, for example, processing a procedure of the registration function or a procedure of the session setup function. Implementing the first core network service may be replaced with completing the first core network service, or may be replaced with performing the first core network service or similar descriptions. This is not limited in this application.

Based on this technical solution, a network entity (for example, the first network entity) may be deployed on the satellite. The access network device requests, from a network entity based on a core network service requested by a terminal device, an operation sequence for performing the core network service, to provide the core network service for the terminal device based on the operation sequence. It is considered that a payload capability of the satellite is limited. The network entity is deployed to replace different core network elements, thereby reducing deployment complexity of a satellite-borne core network. In addition, the core network service requested by the terminal device can be implemented through the network entity, and does not need to be completed through coordination of core network elements on a plurality of satellites. This avoids context migration caused by an unstable network topology, reduces communication latency, and improves quality of service.

With reference to the first aspect, in an implementation of the first aspect, the method further includes: receiving the first operation sequence.

The first network entity provides, based on the requested core network service, the first operation sequence for the access network device to implement the first core network service.

With reference to the first aspect, in an implementation of the first aspect, the first operation sequence is an operation sequence generated based on at least one first processing operation and/or at least one second processing operation, the at least one first processing operation is deployed on the first satellite, and the at least one second processing operation is deployed on the second satellite.

In this technical solution, the first network entity may perform operation orchestration based on processing operations deployed on the first satellite to generate an operation sequence, or may perform operation orchestration based on processing operations deployed on the second satellite to generate an operation sequence, or may perform operation orchestration based on processing operations deployed on the first satellite and the second satellite to generate an operation sequence. The satellites may exchange processing operation deployment information through the network entity, thereby facilitating resource sharing and avoiding occupation of too many satellite payload resources.

With reference to the first aspect, in an implementation of the first aspect, the at least one first processing operation and/or the at least one second processing operation are/is executed based on the first operation sequence.

In this technical solution, the first access network device may execute a specific processing operation based on the first operation sequence determined by the first network entity, to implement the first core network service requested by the terminal device.

With reference to the first aspect, in an implementation of the first aspect, a first message is sent, where the first message indicates at least one processing operation or operation sequence associated with the first access network device and/or at least one processing operation or operation sequence associated with a third access network device, and the third access network device is deployed on a third satellite.

In this technical solution, the first access network device may indicate, to the terminal device, a processing operation or operation sequence locally deployed on the first access network device, or may indicate, to the terminal device, a processing operation or an operation sequence deployed on a satellite on which a neighboring access network device is located, to assist the terminal device in selecting an access network device to be requested.

With reference to the first aspect, in an implementation of the first aspect, a second message is sent, where the second message indicates load processing information of the first access network device and/or load processing information of the third access network device, and the third access network device is deployed on the third satellite.

In this technical solution, the first access network device may indicate, to the terminal device, a load capability of the first access network device or a load capability of the neighboring access network device, for example, a proportion of remaining available resources or processing latency, to assist the terminal device in selecting an access network device to be requested.

According to a second aspect, a communication method is provided. The method may be performed by a first network entity, or may be performed by a chip or a circuit configured in the first network entity. This is not limited in this application.

The method includes: receiving second request information, where the second request information is used to request a first operation sequence; and determining the first operation sequence based on the second request information, where the first operation sequence indicates at least one processing operation and an execution order of the at least one processing operation, the first operation sequence is used to implement a first core network service, and the first network entity is deployed on a first satellite.

The first core network service includes a network function that can be implemented by a core network element, for example, a registration function, a mobility management function, a session setup function, a session update function, an authorization function, and a terminal device positioning function.

In this application, for a communication interface between an access network device and a network entity, and a communication interface between network entities of different satellites, refer to the first aspect. Details are not described again.

For descriptions of the processing operation and the first operation sequence, refer to the first aspect. Details are not described again.

Based on this technical solution, a network entity (for example, the first network entity) may be deployed on the satellite, and the first network entity may determine, based on a core network service requested by a terminal device, an operation sequence for performing the core network service, to provide the core network service for the terminal device based on the operation sequence. It is considered that a payload capability of the satellite is limited. The network entity is deployed to replace different core network elements, thereby reducing deployment complexity of a satellite-borne core network. In addition, the core network service requested by the terminal device can be implemented through the network entity, and does not need to be completed through coordination of core network elements on a plurality of satellites. This avoids context migration caused by an unstable network topology, reduces communication latency, and improves quality of service.

With reference to the second aspect, in an implementation of the second aspect, the second request information is received from a first access network device or a second access network device, where the first access network device is deployed on the first satellite, and the second access network device is deployed on a second satellite.

In this technical solution, the first network entity may receive the second request information from the access network device of the same satellite, or may receive the second request information from the access network device of the neighboring satellite.

With reference to the second aspect, in an implementation of the second aspect, the first operation sequence is generated based on at least one first processing operation and/or at least one second processing operation, where the at least one first processing operation is deployed on the first satellite, and the at least one second processing operation is deployed on the second satellite.

In this technical solution, the first network entity may perform operation orchestration based on processing operations deployed on the first satellite to generate an operation sequence, or may perform operation orchestration based on processing operations deployed on the second satellite to generate an operation sequence, or may perform operation orchestration based on processing operations deployed on the first satellite and the second satellite to generate an operation sequence. The satellites may exchange processing operation deployment information through the network entity, thereby facilitating resource sharing and avoiding occupation of too many satellite payload resources.

With reference to the second aspect, in an implementation of the second aspect, the at least one second processing operation is received from a second network entity, where the second network entity is deployed on the second satellite; and the first operation sequence is generated based on the at least one first processing operation and the at least one second processing operation.

In this technical solution, the first network entity may obtain a part of processing operations (the at least one second processing operation) from the neighboring network entity, to perform operation orchestration in combination with the local processing operation (the at least one first processing operation) of the first network entity, so as to generate the first operation sequence. This facilitates resource sharing and avoids a waste of resources.

With reference to the second aspect, in an implementation of the second aspect, at least one operation sequence is deployed on the first satellite or the second satellite, and the determining the first operation sequence based on the second request information includes: determining the first operation sequence based on the at least one operation sequence.

In this technical solution, an orchestrated operation sequence may be deployed on the satellite. In this case, the network entity does not need to perform operation orchestration, and determines the corresponding operation sequence based on the requested first core network service. This manner reduces complexity of the network entity, and improves communication efficiency.

With reference to the second aspect, in an implementation of the second aspect, the first operation sequence is sent.

According to a third aspect, a communication method is provided. The method may be performed by a first satellite, or may be performed by a chip or a circuit configured in the first satellite. This is not limited in this application.

The method includes: receiving third request information, where the third request information is used to request a first core network service; and determining a first operation sequence based on the third request information, where the first operation sequence indicates at least one processing operation and an execution order of the at least one processing operation, and the first operation sequence is used to implement the first core network service.

The first core network service includes a network function that can be implemented by a core network element, for example, a registration function, a mobility management function, a session setup function, a session update function, an authorization function, and a terminal device positioning function.

For descriptions of the processing operation and the first operation sequence, refer to the first aspect. Details are not described again.

Based on this technical solution, the first satellite may determine, based on the first core network service requested by a terminal device, the operation sequence for performing the core network service, to provide the core network service for the terminal device based on the operation sequence. A core network function requested by the terminal device usually needs to be implemented through coordination of core network elements deployed on a plurality of satellites. The satellite provided in this application may determine the corresponding operation sequence based on the core network service requested by the terminal device. In this way, a payload of the satellite is reduced. In addition, coordination of the core network elements on the plurality of satellites is not needed. This avoids context migration caused by an unstable network topology, reduces communication latency, and improves quality of service.

With reference to the third aspect, in an implementation of the third aspect, the determining the first operation sequence based on the third request information includes: generating the first operation sequence based on at least one first processing operation and/or at least one second processing operation, where the at least one first processing operation is deployed on the first satellite, and the at least one second processing operation is deployed on a second satellite.

In this technical solution, for beneficial effects of determining the first operation sequence by the satellite, refer to the first aspect. Details are not described again.

With reference to the third aspect, in an implementation of the third aspect, the generating the first operation sequence based on the at least one first processing operation and the at least one second processing operation includes: sending fourth request information to the second satellite, where the fourth request information is used to request the first core network service; receiving the at least one second processing operation; and generating the first operation sequence based on the at least one first processing operation and the at least one second processing operation.

In this technical solution, for beneficial effects of jointly determining the first operation sequence by the satellites, refer to the first aspect. Details are not described again.

With reference to the third aspect, in an implementation of the third aspect, the generating the first operation sequence based on the at least one second processing operation includes: sending fifth request information to the second satellite, where the fifth request information is used to request the first core network service; and receiving the first operation sequence, where the first operation sequence is an operation sequence generated by the second satellite based on the at least one second processing operation.

In this technical solution, for beneficial effects of jointly determining the first operation sequence by the satellites, refer to the first aspect. Details are not described again.

With reference to the third aspect, in an implementation of the third aspect, access network devices and network entities are deployed on the first satellite and the second satellite.

According to a fourth aspect, a communication apparatus is provided. The apparatus may be a first access network device, or may be a chip or a circuit configured in the first access network device. This is not limited in this application.

The apparatus includes: a transceiver unit, configured to receive first request information, where the first request information is used to request a first core network service; and a processing unit, configured to send second request information to a first network entity based on the first request information, where the second request information is used to request a first operation sequence, the first operation sequence indicates at least one processing operation and an execution order of the at least one processing operation, the first operation sequence is used to implement the first core network service, and the first network entity is deployed on a first satellite or a second satellite.

With reference to the fourth aspect, in an implementation of the fourth aspect, the transceiver unit is further configured to receive the first operation sequence.

With reference to the fourth aspect, in an implementation of the fourth aspect, the first operation sequence is an operation sequence generated based on at least one first processing operation and/or at least one second processing operation, the at least one first processing operation is deployed on the first satellite, and the at least one second processing operation is deployed on the second satellite.

With reference to the fourth aspect, in an implementation of the fourth aspect, the processing unit is further configured to execute the at least one first processing operation and/or the at least one second processing operation based on the first operation sequence.

With reference to the fourth aspect, in an implementation of the fourth aspect, the transceiver unit is further configured to send a first message, where the first message indicates at least one processing operation or operation sequence associated with the first access network device and/or at least one processing operation or operation sequence associated with a third access network device, and the third access network device is deployed on a third satellite.

With reference to the fourth aspect, in an implementation of the fourth aspect, the transceiver unit is further configured to send a second message, where the second message indicates load processing information of the first access network device and/or load processing information of the third access network device, and the third access network device is deployed on the third satellite.

According to a fifth aspect, a communication apparatus is provided. The apparatus may be a first network entity, or may be a chip or a circuit configured in the first network entity. This is not limited in this application.

The apparatus includes: a transceiver unit, configured to receive second request information, where the second request information is used to request a first operation sequence; and a processing unit, configured to determine the first operation sequence based on the second request information, where the first operation sequence indicates at least one processing operation and an execution order of the at least one processing operation, the first operation sequence is used to implement a first core network service, and the first network entity is deployed on a first satellite.

With reference to the fifth aspect, in an implementation of the fifth aspect, the transceiver unit is further configured to receive the second request information from a first access network device or a second access network device, where the first access network device is deployed on the first satellite, and the second access network device is deployed on a second satellite.

With reference to the fifth aspect, in an implementation of the fifth aspect, the processing unit is further configured to generate the first operation sequence based on at least one first processing operation and/or at least one second processing operation, where the at least one first processing operation is deployed on the first satellite, and the at least one second processing operation is deployed on the second satellite.

With reference to the fifth aspect, in an implementation of the fifth aspect, the transceiver unit is further configured to receive the at least one second processing operation from a second network entity, where the second network entity is deployed on the second satellite; and the processing unit is further configured to generate the first operation sequence based on the at least one first processing operation and the at least one second processing operation.

With reference to the fifth aspect, in an implementation of the fifth aspect, at least one operation sequence is deployed on the first satellite or the second satellite, and the processing unit is further configured to determine the first operation sequence based on the at least one operation sequence.

With reference to the fifth aspect, in an implementation of the fifth aspect, the transceiver unit is further configured to send the first operation sequence.

According to a sixth aspect, a communication apparatus is provided. The apparatus may be a first satellite, or may be a chip or a circuit disposed in the first satellite. This is not limited in this application.

The apparatus includes: a transceiver unit, configured to receive third request information, where the third request information is used to request a first core network service; and a processing unit, configured to determine a first operation sequence based on the third request information, where the first operation sequence indicates at least one processing operation and an execution order of the at least one processing operation, and the first operation sequence is used to implement the first core network service.

With reference to the sixth aspect, in an implementation of the sixth aspect, the processing unit is further configured to generate the first operation sequence based on at least one first processing operation and/or at least one second processing operation, where the at least one first processing operation is deployed on the first satellite, and the at least one second processing operation is deployed on a second satellite.

With reference to the sixth aspect, in an implementation of the sixth aspect, the transceiver unit is further configured to send fourth request information to the second satellite, where the fourth request information is used to request the first core network service; the transceiver unit is further configured to receive the at least one second processing operation; and the processing unit is further configured to generate the first operation sequence based on the at least one first processing operation and the at least one second processing operation.

With reference to the sixth aspect, in an implementation of the sixth aspect, the transceiver unit is further configured to send fifth request information to the second satellite, where the fifth request information is used to request the first core network service; and the transceiver unit is further configured to receive the first operation sequence, where the first operation sequence is an operation sequence generated by the second satellite based on the at least one second processing operation.

With reference to the sixth aspect, in an implementation of the sixth aspect, access network devices and network entities are deployed on the first satellite and the second satellite.

According to a seventh aspect, a communication apparatus is provided. The apparatus is configured to perform the method provided in any one of the first aspect to the third aspect. Specifically, the communication apparatus may include a unit and/or a module configured to perform the method according to any one of the implementations of any one of the first aspect to the third aspect, for example, a processing unit and/or a communication unit.

In an implementation, the communication apparatus includes the communication unit and the processing unit. The communication unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to an eighth aspect, a communication apparatus device is provided, including a processor, and optionally, further including a memory. The processor is configured to control a transceiver to receive/send a signal. The memory is configured to store a computer program. The processor is configured to invoke the computer program from the memory and run the computer program, to cause a sending device to perform the method according to any one of the possible implementations of any one of the first aspect to the third aspect.

Optionally, there are one or more processors, and there are one or more memories.

Optionally, the memory and the processor may be integrated together, or the memory and the processor may be separately disposed.

Optionally, the network device further includes a transceiver. The transceiver may be specifically a transmitter machine (transmitter) and a receiver machine (receiver).

According to a ninth aspect, a computer-readable storage medium is provided. The computer-readable storage medium stores a computer program or code. When the computer program or code is run on a computer, the computer is caused to perform the method according to any one of the possible implementations of any one of the first aspect to the third aspect.

According to a tenth aspect, a chip is provided, including at least one processor. The at least one processor is coupled to a memory. The memory is configured to store a computer program. The processor is configured to invoke the computer program from the memory and run the computer program, to cause a sending device in which the chip system is installed to perform the method according to any one of the possible implementations of any one of the first aspect to the third aspect.

The chip may include an input circuit or an interface configured to send information or data and an output circuit or an interface configured to receive information or data.

According to an eleventh aspect, a computer program product is provided. The computer program product includes computer program code. When the computer program code is run by a sending device, the method according to any one of the possible implementations of any one of the first aspect to the third aspect is performed.

For beneficial effects of the fourth aspect to the eleventh aspect, refer to the beneficial effects of the first aspect to the third aspect. Details are not described again.

### BRIEF DESCRIPTION OF DRAWINGS

FIG. 1 is a diagram of an architecture 100 of a communication system to which an embodiment of this application is applicable;
FIG. 2 is a diagram of an architecture 200 of a communication system to which an embodiment of this application is applicable;
FIG. 3 is a diagram of an architecture 300 of a communication system to which an embodiment of this application is applicable;
FIG. 4 is a diagram of a communication method 400 to which an embodiment of this application is applicable;
FIG. 5 is a diagram of a communication method 500 applicable to a communication system according to an embodiment of this application;
FIG. 6 is a diagram of an architecture 600 of a communication system to which an embodiment of this application is applicable;
FIG. 7 is a diagram of a communication method 700 to which an embodiment of this application is applicable;
FIG. 8 is a block diagram of a structure of a communication apparatus to which an embodiment of this application is applicable; and
FIG. 9 is a block diagram of a structure of a communication apparatus to which an embodiment of this application is applicable.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

A communication system to which this application is applicable is first briefly described below.

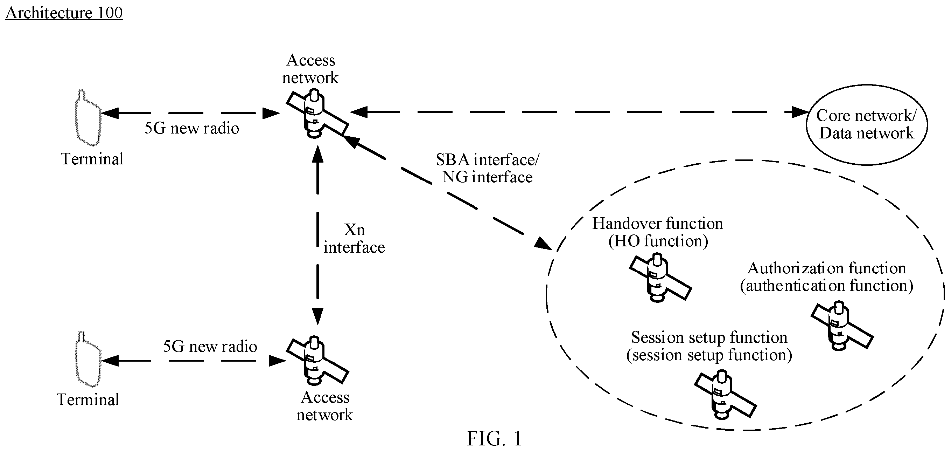

Refer to FIG. 1. For example, FIG. 1 is a diagram of an architecture 100 of a communication system to which an embodiment of this application is applicable. As shown in FIG. 1, a terrestrial mobile terminal UE accesses a network through 5G new radio. An access network device is deployed on a satellite, and is connected to a core network function on the satellite through a radio link. In addition, there is a radio link between satellites, to implement signaling exchange and user data transmission between access network devices. Network elements in FIG. 1 and interfaces between the network elements are described as follows.

A terminal device is a mobile device that supports 5G new radio, and is typically a mobile device such as a mobile phone or a pad. The terminal device may access a satellite network through an air interface and initiate a service such as a call or network access.

An access network device mainly provides a radio access service, schedules a radio resource for an access terminal, provides a reliable wireless transmission protocol, a reliable data encryption protocol, and the like, and is, for example, a base station.

A core network provides services such as user access control, mobility management, session management, user security authentication, and charging. The core network includes a plurality of functional units, and may be divided into a control plane functional entity and a data plane functional entity. An access and mobility management unit (access and mobility management function, AMF) is responsible for user access management, security authentication, and mobility management. A user plane unit (user plane function, UPF) is responsible for functions such as managing user plane data transmission and traffic statistics.

5G new radio is a radio link between the terminal and the access network device.

An Xn interface is an interface between a 5G access network device and the access network device, and is mainly used for signaling exchange such as handover.

An NG interface is an interface between the 5G access network device and a 5G core network, and is mainly used to exchange signaling such as higher layer (non-access stratum, NAS) signaling of the core network and service data of a user.

An SBA interface is a service-based interface between a base station and a satellite-borne core network function unit.

The core network plays a key role in a communication network and is a management center of connections and services. A 5G service-based core network architecture SBA (Service-Based Architecture) defined in 3GPP specifications is used to decouple and integrate network functions through modularization. An NF of the core network may provide a capability of the NF in a form of a service to the outside through a service-based interface of the NF.

The following describes a network architecture to which this application is applicable.

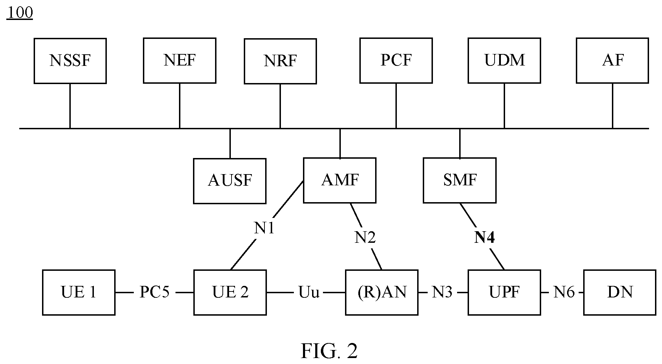

Refer to FIG. 2. For example, FIG. 2 is a diagram of a network architecture.

As shown in FIG. 2, a 5G system (5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the internet. The NSSF, the AUSF, the UDM, the NEF, the NRF, the PCF, the AF, the AMF, the SMF, and the UPF are network elements in a core network. Because the 5G system is used as an example in FIG. 2, the core network may be referred to as a 5G core network (5G core network, 5GC or 5GCN).

The following briefly describes the network elements shown in FIG. 2.
1. The UE (including UE 1 and UE 2 in FIG. 1) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, another processing device or wearable device connected to a wireless modem, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and largesized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

2. The (radio) access network ((radio) access network, (R)AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses the AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection between the terminal device and a 3GPP core network by using the non-3GPP technology.

The AN device can be responsible for functions such as radio resource management, quality of service (quality of service, QoS) management, and data compression and encryption on an air interface side. The AN device provides an access service for the terminal device, to complete forwarding of control signals and user data between the terminal device and the core network.

For example, the AN device may include, but is not limited to, a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission reception point (transmission reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a further communication network. A specific technology used by the AN device and a specific device form of the AN device are not limited in embodiments of this application.

3. The AMF is mainly used for access control, mobility management, attachment and detachment, and the like.

4. The SMF is mainly used for user plane network element selection, user plane network element redirection, internet protocol (internet protocol, IP) address assignment for the terminal device, session setup, modification, and release, and QoS control.

5. The UPF is mainly used for receiving and forwarding user plane data. For example, the UPF may receive user plane data from the DN, and send the user plane data to the terminal device through the AN device. The UPF may alternatively receive user plane data from the terminal device via the AN device, and forward the user plane data to the DN.

6. The NEF is mainly used for securely exposing, to the outside, a service, a capability, and the like that are provided by a 3GPP network function.

7. The PCF is mainly used for guiding a unified policy framework for network behavior, and provide policy rule information and the like for a control plane network element (for example, the AMF or the SMF).

8. The AF is mainly used for providing a service for a 3GPP network, for example, interacting with the PCF to perform policy control.

9. The network slice selection function (network slice selection function, NSSF) is mainly used for network slice selection.

10. The UDM is mainly used for subscription data management of the UE, including storage and management of a UE identifier, access authorization of the UE, and the like.

11. The DN is an operator network mainly used for providing a data service for the UE, for example, the internet (Internet), a third-party service network, or an IP multi-media service (IP multi-media service, IMS) network.

12. The AUSF is mainly used for user authorization and the like.

13. The NRF is mainly used for storing a network function entity, description information of a service provided by the network function entity, and the like.

In the network architecture shown in FIG. 2, the network elements may communicate with each other through interfaces. For example, the UE 2 is connected to the AN device according to a radio resource control (radio resource control, RRC) protocol, and the UE and the AN device communicate with each other through a Uu interface. The UE 1 and the UE 2 communicate with each other through a PC5 interface. The PC5 interface may be used for mutual discovery between the UEs and data and signaling transmission between the UEs. In addition, in FIG. 1, N1 is an interface between the UE 2 and the AMF. N2 is an interface between the (R)AN and the AMF, and is used for sending a NAS message and the like. N3 is an interface between the RAN and the UPF, and is used for user plane data transmission and the like. N4 is an interface between the SMF and the UPF, and is used for transmission of information such as tunnel identification information of an N3 connection, data buffer indication information, and a downlink data notification message. An N6 interface is an interface between the UPF and the DN, and is used for user plane data transmission and the like. An N11 interface is an interface between the AMF and the SMF.

It should be understood that the network architecture shown above is merely an example for description, a network architecture to which embodiments of this application are applicable is not limited thereto, and embodiments of this application are applicable to any network architecture that can implement the functions of the foregoing network elements.

It should be further understood that the functions or the network elements, such as the AMF, the SMF, the UPF, the PCF, the UDM, the NSSF, and the AUSF shown in FIG. 2 may be understood as network elements configured to implement different functions, and for example, may be combined into a network slice based on a requirement. These network elements may be independent devices, may be integrated into a same device to implement different functions, may be network components in a hardware device, may be software functions running on dedicated hardware, or may be virtualization functions instantiated on a platform (for example, a cloud platform). Specific forms of the network elements are not limited in this application.

It should be further understood that the foregoing names are defined merely for ease of distinguishing between different functions, and should not constitute any limitation on this application. This application does not exclude a possibility that other names are used in future communication networks and other future networks. For example, in future communication networks, some or all of the foregoing network elements may still use terms in 5G, or may use other names.

In a satellite communication system, to reduce latency caused by a round-trip of core network signaling between a satellite and the ground, a core network element may be deployed on a satellite platform, to provide a core network service for a user.

However, due to a limited payload capability of a satellite, it is difficult to deploy a complete core network function on one satellite. For example, different core network elements, such as an AMF and an SMF, may be deployed on different satellites. To complete a core network function requested by a user, for example, user registration or session setup, a plurality of core network elements need to work together to jointly perform a corresponding operation to implement the core network function. However, because a satellite network topology structure may dynamically change, a serving satellite of the user may change. A core network element deployed on an original serving satellite needs to migrate a context of the user to a core network element deployed on a target serving satellite, so that the core network element deployed on the target serving satellite provides a core network service for the user. The satellite network topology structure changes frequently, and inter-satellite links are unstable. Frequent user context migration causes high signaling overheads and a high probability of context errors, affecting quality of service.

In view of this, embodiments of this application provide a communication solution. A core network function may be deployed on a satellite, so that a core network service request of a user can be implemented through the satellite-borne core network function, thereby reducing core network communication latency .

With reference to the accompanying drawings, the following describes in detail a communication method provided in embodiments of this application. Embodiments provided in this application may be applied to the communication system shown in FIG. 1. This is not limited.

The following describes in detail the solutions of this application.

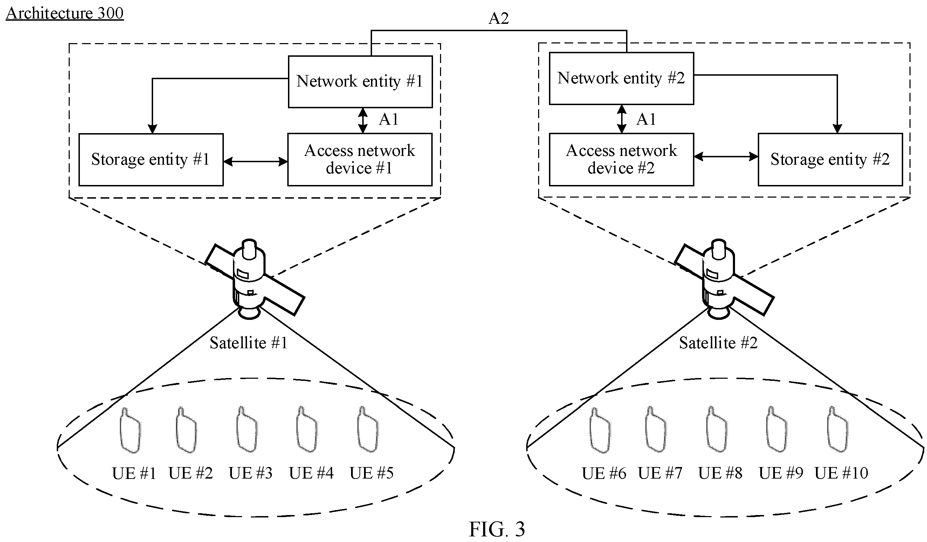

Refer to FIG. 3. For example, FIG. 3 is a diagram of an architecture 300 of a communication system according to an embodiment of this application. As shown in FIG. 3, the communication system includes at least one satellite and at least one terminal device, for example, a satellite #1, a satellite #2, and UE #1 to UE #10 in FIG. 3.

An access network device #1 and a network entity #1 are deployed on the satellite #1. The UE #1 to the UE #5 may access the access network device #1 through new radio. The access network device #1 and the network entity #1 may exchange information through an interface, for example, an A1 interface.

An access network device #2 and a network entity #2 are deployed on the satellite #2. The UE #6 to the UE #10 may access the access network device #2 through new radio. The access network device #2 and the network entity #2 may exchange information through an interface, for example, an A1 interface. The network entity #1 and the network entity #2 may exchange information through an interface, for example, an A2 interface.

The satellite #1 and the satellite #2 may be adjacent satellites, and the satellite #1 and the satellite #2 may communicate with each other through an inter-satellite link.

In this application, specific names of an interface between an access network device and a network entity and an interface between network entities do not limit the protection scope of this application, and the interfaces are collectively described as an A1 interface and an A2 interface respectively below.

Network entities (for example, the network entity #1 and the network entity #2) are configured to determine operation sequences based on core network services requested by users (for example, the UE #1 to the UE #10).

The core network services include network functions that can be implemented by core network elements, for example, a registration function, a mobility management function, a session setup function, a session update function, an authorization function, and a user positioning function.

The operation sequence refers to at least one processing operation that needs to be executed to implement the core network service and an execution order of the at least one processing operation.

The at least one processing operation includes a processing operation that can be used to perform a single operation, for example, a context read/write operation, used to obtain a latest context parameter of a user from a data storage unit or write a latest context parameter of a user into a data storage unit, the context parameter including subscription data/policy data/session data, or the like, and a function of the context read/write operation being similar to an operation such as Nudsf_UnstructuredDataManagement_Query/Namf_Communication_UEContextTransfer/Nudm _SubscriberDataManagement/Npcf_AMPolicyControl; an authentication/authorization operation, used to select a corresponding algorithm based on a user context to perform identity identification, authorization, or the like; a policy generation operation, used to create/maintain a mobility management policy, a session policy, and the like for the user, and having a function similar to Npcf_AMPolicyControl/Npcf_SMPolicyControl; a transmission configuration operation, used to maintain a transmission path, and mainly used to generate tunnel parameters on a CN side and tunnel parameters on an AN side, associate the CN side and the AN side, and establish uplink and downlink data links, the tunnel parameters including an IP address and a port number; or an assisted positioning operation, used to calculate a user location, and so on.

For example, an operation sequence that can be used to perform the session setup function may be: context read operation -> authentication/authorization operation -> policy generation operation -> transmission configuration operation -> context write operation. The operations performed according to this order can implement a logical function of session setup. The execution order may be a predefined order. This is merely an example for description, and no limitation is imposed.

For example, an operation sequence that can be used to perform the registration function may be: context read operation -> authentication/authorization operation -> policy generation operation -> context write operation. The operations performed according to this order can implement a logical function of registration. The execution order may be a predefined order. This is merely an example for description, and no limitation is imposed.

For example, an operation sequence that can be used to perform the handover function may be: context read operation -> transmission configuration operation -> context write operation. The operations performed according to this order can implement a logical function of handover. The execution order may be a predefined order. This is merely an example for description, and no limitation is imposed.

In this application, a storage entity may be deployed on a satellite. The storage entity may be configured to store (or save) the at least one processing operation, or the storage entity may be configured to store (or save) at least one operation sequence.

In an implementation, a network entity may select at least one processing operation based on a core network service to perform operation orchestration, to obtain an operation sequence.

For example, a storage entity #1 may be deployed on the satellite #1, and the storage entity #1 may store at least one processing operation. The network entity #1 on the satellite #1 invokes (or selects) a corresponding processing operation from the storage entity #1 based on a core network service to perform operation orchestration, to generate an operation sequence. A storage entity #2 may be deployed on the satellite #2, and the storage entity #2 may store at least one processing operation. The network entity #2 on the satellite #2 invokes (or selects) a corresponding processing operation from the storage entity #2 based on a core network service to perform operation orchestration, to generate an operation sequence.

In an implementation, at least one operation sequence may be directly deployed on a satellite, and a network entity selects one operation sequence based on a core network service.

For example, a storage entity #1 may be deployed on the satellite #1, and the storage entity #1 may store at least one operation sequence. The network entity #1 on the satellite #1 invokes (or selects) a corresponding operation sequence from the storage entity #1 based on a core network service. A storage entity #2 may be deployed on the satellite #2, and the storage entity #2 may store at least one operation sequence. The network entity #2 on the satellite #2 invokes (or selects) a corresponding operation sequence from the storage entity #2 based on a core network service.

In this application, in a multi-satellite coordination scenario, a single satellite may not be able to complete a complete core network function, and the core network function needs to be completed through coordination of core network capabilities of a plurality of other satellites.

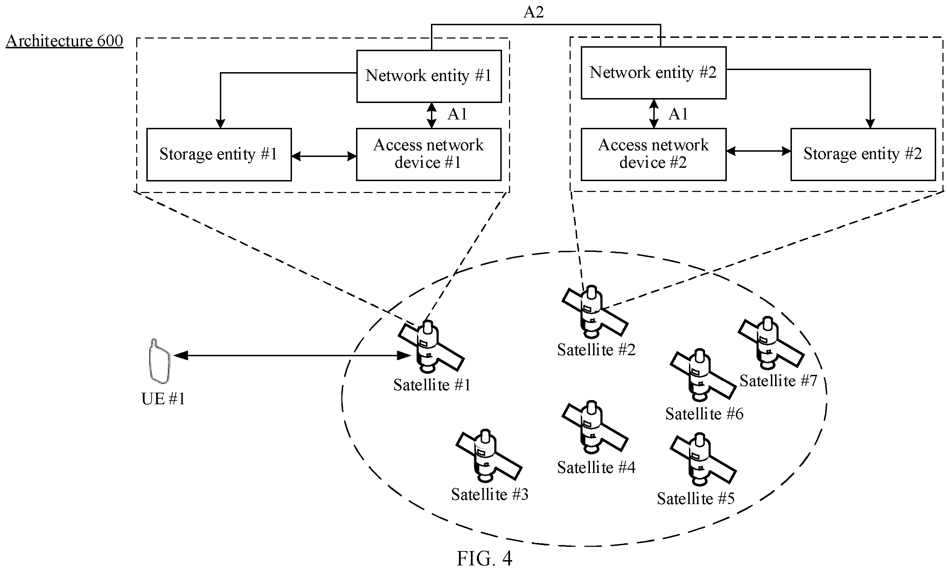

Refer to FIG. 4. For example, FIG. 4 is a diagram of an architecture 400 of a communication system according to an embodiment of this application. As shown in FIG. 4, the communication system includes at least one satellite and at least one terminal device, for example, a satellite #1 to a satellite #7 in FIG. 4.

Deployment of the satellite #1 and the satellite #2 is the same as that of the satellite #1 and the satellite #2 in the architecture 300. Details are not described again.

Different from the architecture 300, the architecture 400 further includes the satellite #3 to the satellite #7. Deployment of the satellite #3 to the satellite #7 is the same as that of the satellite #1 or the satellite #2. To be specific, a network entity #3 is deployed on the satellite #3, a network entity #4 is deployed on the satellite #4, and so on.

In addition, the network entities may also communicate with each other through an interface, for example, an A2 interface.

The satellite #1 to the satellite #7 may be adjacent satellites, and the satellite #1 to the satellite #7 may communicate with each other through inter-satellite links.

In a possible implementation, a network entity may allocate an index of a core network service to the core network service requested by a terminal device, and determine at least one processing operation for performing the core network service and an operation execution order (namely, an operation sequence).

Optionally, the network entity may further determine an access network device execution order (denoted as an access network device execution sequence) of the at least one processing operation.

The at least one processing operation may include processing operations deployed on a same satellite, or may include processing operations deployed on different satellites.

Further, the network entity may encapsulate the index of the core network service, the operation sequence, the access network device execution sequence, and context information of the terminal device, where an encapsulated data packet indicates at least one access network device to execute a corresponding processing operation in the operation sequence based on the access network device execution sequence and process a context of the terminal device, to implement the core network service.

In this implementation, an access network device may execute, based on the processing operation execution sequence in the encapsulated data packet, corresponding processing operations in the operation sequence and process the context of the terminal device, update the operation sequence (for example, three processing operations are executed, and five processing operations are not executed), and determine a next access network device based on the access network device execution sequence. The network entity re-encapsulates an updated context of the terminal device and an updated operation sequence, and sends a re-encapsulated data packet to the next access network device to execute corresponding processing operations and process the context of the terminal device, until all the corresponding processing operations in the operation sequence are completed.

An encapsulated data packet exchanged between inter-satellite network entities may include control information and data information, where the control information includes an index of a core network service, an operation sequence, and an access network device execution sequence, and the data information includes to-be-processed context information of a terminal device.

It may be understood that when a data packet encapsulated by a network entity does not include an access network device execution sequence, the access network device may determine a next-hop node based on a local capability of the access network device, and the network entity re-encapsulates an updated context of a terminal device and an updated operation sequence, and sends a re-encapsulated data packet to the next access network device to execute corresponding processing operations and process the context of the terminal device, until all corresponding processing operations in the operation sequence are completed.

It should be understood that the network architecture shown above is merely an example for description, a network architecture to which embodiments of this application are applicable is not limited thereto, and embodiments of this application are applicable to any network architecture that can implement the functions of the foregoing network elements.

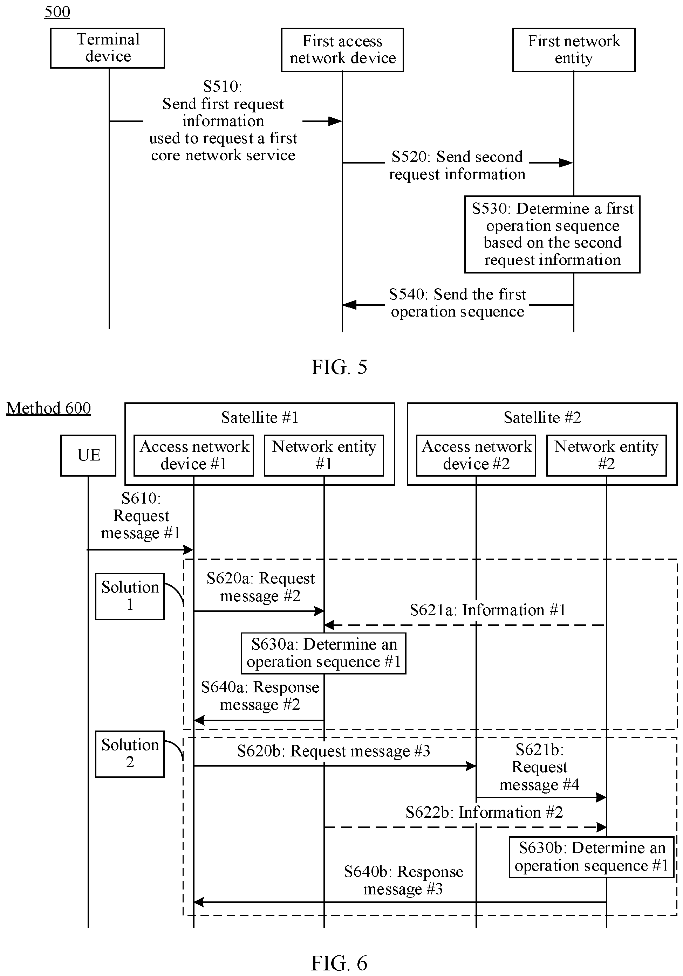

Refer to FIG. 5. For example, FIG. 5 is a schematic flowchart of a communication method 500 according to an embodiment of this application. For ease of description, the method 500 is described below by using interaction whose execution bodies are an access network device and a network entity as an example. It may be understood that the execution body of the method 500 may alternatively be a component (for example, a chip or a circuit) of the access network device or a component (for example, a chip or a circuit) of the network entity. This is not limited herein. Steps described below as being performed by a single execution body may alternatively be performed by a plurality of execution bodies. These execution bodies may be logically and/or physically separated.

In the method 500, a first access network device is an access network device deployed on a first satellite, for example, an access network device #1, and the second access network device is an access network device deployed on a second satellite, for example, an access network device #2.

At least one operation or operation sequence may be deployed on the first satellite and the second satellite. For example, at least one first processing operation is deployed on the first satellite, and at least one second processing operation is deployed on the second satellite. For another example, at least one operation sequence is deployed on the first satellite or the second satellite. For the at least one operation or operation sequence, refer to the descriptions in FIG. 3. Details are not described again.

In this application, a storage entity may be deployed on a satellite. The storage entity may be configured to store (or save) the at least one processing operation, or the storage entity may be configured to store (or save) the at least one operation sequence. For example, a storage entity #1 is deployed on a satellite #1, and the storage entity #1 may store at least one first processing operation and/or at least one operation sequence; and a storage entity #2 is deployed on a satellite #2, and the storage entity #2 may store at least one second processing operation and/or at least one operation sequence.

The at least one first processing operation and the at least one second processing operation may be partially the same, may be completely the same, or may be completely different. This is not limited in embodiments of this application.

The at least one operation sequence deployed on the first satellite and the at least one operation sequence deployed on the second satellite may be partially the same, may be completely the same, or may be completely different. This is not limited in embodiments of this application.

A network entity, such as a first network entity, may be deployed on the first satellite and/or the second satellite.

The method 500 shown in FIG. 5 may include the following steps.

S510: The first access network device receives first request information.

The first access network device receives the first request information from a terminal device, where the first request information is used to request a first core network service.

The first core network service is used as an example of the foregoing core network services, for example, the registration function, the mobility management function, the session setup function, the session update function, the authorization function, and the user positioning function.

S520: The first access network device sends second request information to the first network entity based on the first request information.

The first access network device determines, based on the first request information, the first core network service requested by the terminal device, and sends the second request information to the first network entity based on the first core network service, where the second request information is used to request a first operation sequence.

The first operation sequence indicates at least one processing operation and an execution order of the at least one processing operation.

The first operation sequence is used to execute the first core network service.

For example, if the first core network service is the registration function, the first operation sequence may be: context read operation -> authentication/authorization operation -> policy generation operation -> context write operation.

The first operation sequence is an operation sequence generated based on the at least one first processing operation and/or the at least one second processing operation.

In this application, the first access network device may request the network entity deployed on the first satellite to determine the first operation sequence, or may request the network entity deployed on the second satellite to determine the first operation sequence.

For example, the first access network device has a poor load processing capability, and the first access network device may request the network entity deployed on the second satellite to determine the first operation sequence.

In conclusion, the first network entity may be a network entity deployed on the first satellite, or may be a network entity deployed on the second satellite. The following two solutions may be included.

### Solution 1:

The first network entity is deployed on the first satellite, and a second network entity is deployed on the second satellite.

In a possible implementation, the first access network device sends the second request information to the first network entity.

### Solution 2:

A second network entity is deployed on the first satellite, and the first network entity is deployed on the second satellite.

In another possible implementation, the first access network device may send the second request information to the first network entity through the second access network device.

The first access network device may alternatively send the second request information to the first network entity through the network entity (the second network entity) deployed on the first satellite.

In a possible implementation, the first access network device may send a second message to the terminal device, where the second message indicates load processing information of the first access network device and/or load processing information of a third access network device, and the third access network device is deployed on a third satellite.

The third satellite is a neighboring satellite, and the third satellite and the second satellite may be a same satellite.

For example, the load processing information may be a proportion of remaining available resources or processing latency.

For example, the second message may be a system message, for example, a SIB message.

In a possible implementation, the first access network device may send a first message to the terminal device, where the first message indicates at least one processing operation or operation sequence associated with the first access network device and/or at least one processing operation or operation sequence associated with the third access network device, and the third access network device is deployed on the third satellite.

The first message and the second message are used by the terminal device to select an access point (an access network device).

For example, the first message may be a system message, for example, a SIB message.

For example, if the first access network device and/or the third access network device are/is associated with at least one processing operation, a description information element of the processing operation is included in the SIB message.

S530: The first network entity determines the first operation sequence based on the second request information.

The first network entity may determine the first operation sequence in the following two manners.

Manner 1: The first network entity performs operation orchestration based on the at least one processing operation, to generate an operation sequence (the first operation sequence) having an execution order.

For example, the first network entity performs operation orchestration based on the at least one processing operation stored (or saved) on the storage entity #1 and/or the at least one processing operation stored (or saved) on the storage entity #2, to obtain the first operation sequence.

It may be understood that, in a multi-satellite collaboration scenario, the first network entity may perform operation orchestration based on a plurality of processing operations stored (or saved) on a plurality of storage entities (for example, the storage entity #1, the storage entity #2, a storage entity #3, a storage entity #4, and a storage entity #5), to obtain the first operation sequence.

Manner 2: The first network entity selects, based on the operation sequence deployed on the first satellite or the second satellite, an operation sequence (the first operation sequence) that can be used to perform the first core network service.

For example, the first network entity selects the first operation sequence based on the at least one operation sequence stored (or saved) on the storage entity #1 and/or the at least one operation sequence stored (or saved) on the storage entity #2.

The following describes the foregoing two manners in detail with reference to the two solutions in S520.

In a possible implementation, the first operation sequence is generated based on the at least one first processing operation and/or the at least one second processing operation.

For Solution 1: The first network entity is deployed on the first satellite, and the second network entity is deployed on the second satellite.

For example, the first network entity performs operation orchestration based on the at least one first processing operation, to generate the first operation sequence.

It may be understood that the first access network device sends the second request information to the first network entity deployed on the first satellite, and when the at least one first processing operation deployed on the first satellite is sufficient to implement the first core network service, the first network entity may generate the first operation sequence based on the at least one first processing operation.

It may be understood that the first network entity may obtain the at least one first processing operation from the storage entity #1.

For example, the first network entity performs operation orchestration based on the at least one first processing operation and the at least one second processing operation, to generate the first operation sequence.

It may be understood that, when the first access network device sends the second request information to the first network entity deployed on the first satellite, and the at least one first processing operation deployed on the first satellite is insufficient to implement the first core network service, the first network entity may obtain the at least one second processing operation through the second network entity deployed on the second satellite, and perform operation orchestration based on the at least one first processing operation and the at least one second processing operation, to generate the first operation sequence.

It may be understood that the first network entity may obtain the at least one first processing operation from the storage entity #1, the second network entity may obtain the at least one second processing operation from the storage entity #2, and the second network entity sends the at least one second processing operation to the first network entity.

It should be understood that when a processing capability of the first access network device is limited, the first access network device may send a request for a core network service (for example, the first core network service) of the terminal device to an access network device of a neighboring satellite (for example, the second access network device of the second satellite), so that an operation sequence can be determined through a network entity of the neighboring satellite.

The processing capability of the first access network device may be, for example, a load capability of the first access network device.

For Solution 2: The second network entity is deployed on the first satellite, and the first network entity is deployed on the second satellite.

For example, the first network entity performs operation orchestration based on the at least one second processing operation, to generate the first operation sequence.

It may be understood that the first access network device may forward, through the second access network device, the second request information to the network entity deployed on the second satellite, to request the network entity (the first network entity) deployed on the second satellite to determine the first operation sequence. When the at least one second processing operation deployed on the second satellite is sufficient to implement the first core network service, the first network entity may generate the first operation sequence based on the at least one second processing operation.

It may be understood that the first network entity may obtain the at least one second processing operation from the storage entity #2.

For example, the first network entity performs operation orchestration based on the at least one first processing operation and the at least one second processing operation, to generate the first operation sequence.

It may be understood that the first access network device may forward, through the second access network device, the second request information to the network entity deployed on the second satellite, to request the network entity (the first network entity) deployed on the second satellite to determine the first operation sequence. When the at least one second processing operation deployed on the second satellite is insufficient to implement the first core network service, the first network entity may obtain the at least one first processing operation through the second network entity deployed on the first satellite, and perform operation orchestration based on the at least one first processing operation and the at least one second processing operation, to generate the first operation sequence.

It may be understood that the first network entity may obtain the at least one second processing operation from the storage entity #2, the second network entity may obtain the at least one first processing operation from the storage entity #1, and the second network entity sends the at least one first processing operation to the first network entity.

In another possible implementation, at least one operation sequence is deployed on the first satellite or the second satellite, and the first operation sequence is determined based on the at least one operation sequence.

For Solution 1: The first network entity is deployed on the first satellite, and the second network entity is deployed on the second satellite.

For example, the first network entity determines the first operation sequence based on the at least one operation sequence deployed on the first satellite.

It may be understood that, if the first network entity may determine that there is an operation sequence that can be used to implement the first core network service in the at least one operation sequence deployed on the first satellite, the first network entity may directly determine the operation sequence as the first operation sequence.

For example, the first core network service is the registration function, and the first network entity includes an operation sequence {context read operation -> authentication/authorization operation -> policy generation operation -> context write operation}. In this case, the first network entity may determine the operation sequence as the first operation sequence.

It should be understood that, in this implementation, the first network entity does not need to perform operation selection and operation orchestration, and the first network entity may select, from orchestrated operation sequences based on a requirement of the first core network service, an operation sequence that meets the core network service.

It may be understood that the first network entity may obtain the first operation sequence from the storage entity #1.

For example, the first network entity determines the first operation sequence based on the at least one operation sequence deployed on the second satellite.

It may be understood that if the first network entity may determine that there is no operation sequence that can be used to implement the first core network service in the at least one operation sequence deployed on the first satellite, the first network entity may obtain an operation sequence through the second network entity, where the operation sequence can meet the first core network service, and the operation sequence is the first operation sequence.

For example, the first core network service is the registration function, and the second network entity includes an operation sequence {context read operation -> authentication/authorization operation -> policy generation operation -> context write operation}. In this case, the first network entity may obtain the operation sequence through the first network entity, and the operation sequence is the first operation sequence.

It may be understood that the first network entity cannot obtain the first operation sequence from the storage entity #1, the second network entity can obtain the first operation sequence from the storage entity #2, and the second network entity sends the first operation sequence to the first network entity.

For Solution 2: The second network entity is deployed on the first satellite, and the first network entity is deployed on the second satellite.

For example, the first network entity determines the first operation sequence based on the at least one operation sequence deployed on the second satellite.

For example, the network entity (the second network entity) deployed on the first satellite may determine that there is no operation sequence that can be used to implement the first core network service in the at least one operation sequence deployed on the first satellite. The second network entity may forward a request for the first core network service to the network entity (the first network entity) deployed on the second satellite. The first network entity determines, based on the at least one operation sequence deployed on the second satellite, an operation sequence that can meet the first core network service, where the operation sequence is the first operation sequence.

It may be understood that the second network entity cannot obtain the first operation sequence from the storage entity #1, the first network entity can obtain the first operation sequence from the storage entity #2, and the first network entity sends the first operation sequence to the second network entity.

For another example, a processing capability of the first access network device is limited, and the first access network device forwards, through the second access network device, a request for the first core network service to the network entity (the first network entity) deployed on the second satellite. The first network entity determines, based on the at least one operation sequence deployed on the second satellite, an operation sequence that can meet the first core network service, where the operation sequence is the first operation sequence.

S540: The first network entity sends the first operation sequence to the first access network device.

Correspondingly, the first access network device receives the first operation sequence from the first network entity.

For Solution 1, the first network entity is deployed on the first satellite, and the first access network device receives the first operation sequence from the first network entity.

For Solution 2, the first network entity is deployed on the second satellite, and the first access network device receives the first operation sequence from the first network entity through the second access network device.

The first access network device executes the at least one first processing operation and/or the at least one second processing operation based on the first operation sequence, to provide the first core network service for the terminal device.

For example, the first core network service is the session setup function, and the first operation sequence is {context read operation -> authentication/authorization operation -> policy generation operation ->transmission configuration operation -> context write operation}. In this case, the first access network device performs {context read operation -> authentication/authorization operation -> policy generation operation ->transmission configuration operation -> context write operation}, to complete session setup, and sends a session setup complete response message to the terminal device.

In the foregoing solutions, communication between the first access network device and the first network entity, and communication between the second access network device and the second network entity may both be performed through the A1 interface shown in FIG. 3, and communication between the first network entity and the second network entity may be performed through the A2 interface shown in FIG. 3.

According to the foregoing solutions, a network entity may be deployed on a satellite. The network entity may perform operation orchestration or determine an operation sequence based on a core network service requested by a terminal device, and provide a core network service for the terminal device based on the operation sequence. It is considered that a payload capability of the satellite is limited. The network entity is deployed to replace different core network elements, thereby reducing deployment complexity of a satellite-borne core network. In addition, the core network service requested by the terminal device can be implemented through the network entity, and does not need to be completed through coordination of core network elements on a plurality of satellites. This avoids context migration caused by an unstable network topology, reduces communication latency, and improves quality of service.

The following describes a specific implementation applicable to the foregoing method 500.

Refer to FIG. 6. For example, FIG. 6 is a schematic flowchart of a communication method 600 according to an embodiment of this application. For ease of description, the method 600 is described below by using interaction whose execution bodies are an access network device and a network entity as an example. It may be understood that the execution body of the method 600 may alternatively be a component (for example, a chip or a circuit) of the access network device or a component (for example, a chip or a circuit) of the network entity. This is not limited herein. Steps described below as being performed by a single execution body may alternatively be performed by a plurality of execution bodies. These execution bodies may be logically and/or physically separated.

In the method 600, an access network device #1 and a network entity #1 are deployed on a satellite #1, an access network device #2 and a network entity #2 are deployed on a satellite #2, and UE may communicate with a network through the access network device #1.

In addition, at least one processing operation #1 may be deployed on the satellite #1, and at least one processing operation #2 may be deployed on the satellite #2.

For example, a storage entity #1 is deployed on a first satellite, and the storage entity #1 includes at least one processing operation #1. A storage entity #2 is deployed on a second satellite, and the storage entity #2 includes at least one processing operation #2.

Alternatively, at least one operation sequence #a may be deployed on the satellite #1, and at least one operation sequence #b may be deployed on the satellite #2.

For example, a storage entity #1 is deployed on a first satellite, and the storage entity #1 includes at least one operation sequence #a. A storage entity #2 is deployed on a second satellite, and the storage entity #2 includes at least one operation sequence #b.

The at least one processing operation #1 and the at least one processing operation #2 may be partially the same, may be completely the same, or may be completely different. This is not limited in embodiments of this application.

The at least one operation sequence #a and the at least one operation sequence #b may be partially the same, may be completely the same, or may be completely different. This is not limited in embodiments of this application.

For the processing operation #1 or the processing operation #2, the operation sequence #a, or the operation sequence #b, refer to the descriptions in FIG. 3. Details are not described again.

The method 600 shown in FIG. 6 may include the following steps.

S610: The UE sends a request message #1 to the access network device #1.

The request message #1 is used to request a core network service #1 from the access network device #1.

The request message #1 may include identification information of the core network service #1.

The core network service #1 is used as an example of the first core network service. For details, refer to the descriptions in the method 400. Details are not described again.

The access network device #1 receives the request message #1 of the UE, and may determine whether the access network device #1 has a processing capability. For example, when a proportion of remaining available resources of the access network device #1 is large, the access network device #1 may determine that a load capability of the access network device #1 is sufficient to process the core network service #1 (denoted as Solution 1). However, when a proportion of remaining available resources of the access network device #1 is small, the access network device #1 may determine that a load capability of the access network device #1 is insufficient to process the core network service #1, and may forward a request for the core network service #1 to the access network device #2 (denoted as Solution 2). When the access network device #1 has the processing capability, specific execution steps include S620a to S640a. When the access network device #1 does not have the processing capability, specific execution steps include S620b to S640b.

S620a to S640a:
S620a: The access network device #1 sends a request message #2 to the network entity #1.

The access network device #1 sends the request message #2 to the network entity #1 based on the request message #1, where the request message #2 is used to request the network entity #1 to determine an operation sequence #1.

The request message #2 may include the identification information of the core network service #1.

S630a: The network entity #1 determines the operation sequence #1.

The network entity #1 may determine the operation sequence #1 based on the identification information of the core network service #1.

In an example, the network entity #1 may perform operation orchestration based on the at least one processing operation #1, to generate the operation sequence #1.

In another example, the network entity #1 may select one operation sequence as the operation sequence #1 based on the at least one operation sequence #a, where the operation sequence #1 is one of the at least one operation sequence #a.

In another example, the network entity #1 may perform operation orchestration based on the at least one processing operation #1 and the at least one processing operation #2, to generate the operation sequence #1.

In this implementation, the network entity #1 may obtain the at least one processing operation #2 from the network entity #2. In other words, before S630a, the network entity #1 may perform S621a.

S621a: The network entity #1 obtains information #1 from the network entity #2.

The information #1 includes the at least one processing operation #2.

It may be understood that the network entity #1 may send a request for the core network service #1 to the network entity #2, and the network entity #2 sends the at least one processing operation #2 to the network entity #1 based on the request for the core network service #1.

It may be understood that the network entity #1 may obtain the at least one processing operation #1 or the at least one operation sequence #a from the storage entity #1; and the network entity #2 may obtain the at least one processing operation #2 or the at least one operation sequence #b from the storage entity #2, and send the at least one processing operation #2 or the at least one operation sequence #b to the network entity #1.

S640a: The network entity #1 sends a response message #2 to the access network device #1.

The response message #2 includes the operation sequence #1.

The access network device #1 executes the at least one processing operation #1 and/or the at least one processing operation #2 based on the operation sequence #1, to provide the core network service #1 for the UE.

S620b to S640b:
S620b: The access network device #1 sends a request message #3 to the access network device #2.

The access network device #1 sends the request message #3 to the access network device #2 based on the request message #1, where the request message #3 is used to request the network entity #2 of the access network device #2 to determine the operation sequence #1.

The request message #3 may include the identification information of the core network service #1.

S621b: The access network device #2 sends a request message #4 to the network entity #2.

The request message #4 is used to request the network entity #2 to determine the operation sequence #1.

The request message #4 may include the identification information of the core network service #1.

S630b: The network entity #2 determines the operation sequence #1.

The network entity #2 may determine the operation sequence #1 based on the identification information of the core network service #1.

In an example, the network entity #2 may perform operation orchestration based on the at least one processing operation #2, to generate the operation sequence #1.

In another example, the network entity #2 may select one operation sequence as the operation sequence #1 based on the at least one operation sequence #b, where the operation sequence #1 is one of the at least one operation sequence #b.

In another example, the network entity #2 may perform operation orchestration based on the at least one processing operation #1 and the at least one processing operation #2, to generate the operation sequence #1.

In this implementation, the network entity #2 may obtain the at least one processing operation #1 from the network entity #1. In other words, before S630b, the network entity #2 may perform S622b.

S622b: The network entity #2 obtains information #2 from the network entity #1.

The information #2 includes the at least one processing operation #1.

It may be understood that the network entity #2 may send a request for the core network service #1 to the network entity #1, and the network entity #1 sends the at least one processing operation #1 to the network entity #2 based on the request for the core network service #1.

It may be understood that the network entity #2 may obtain the at least one processing operation #2 or the at least one operation sequence #b from the storage entity #2; and the network entity #1 may obtain the at least one processing operation #1 or the at least one operation sequence #a from the storage entity #1, and send the at least one processing operation #1 or the at least one operation sequence #a to the network entity #2.

S640b: The network entity #2 sends a response message #3 to the access network device #1 through the access network device #2.

The response message #3 includes the operation sequence #1.

The access network device #1 executes the at least one processing operation #1 and/or the at least one processing operation #2 based on the operation sequence #1, to provide the core network service #1 for the UE.

According to the foregoing solutions, a network entity may be deployed on a satellite. The network entity may perform operation orchestration or determine an operation sequence based on a core network service requested by a terminal device, and provide a core network service for the terminal device based on the operation sequence. The network entity is deployed to replace different core network elements, thereby reducing deployment complexity of a satellite-borne core network. The core network service requested by the terminal device can be implemented through the network entity. This avoids context migration caused by an unstable network topology, reduces communication latency, and improves quality of service.

In this application, an access network device, a network entity, and a storage entity may be coupled to a satellite device. In other words, the access network device, the network entity, and the storage entity may be implemented inside a satellite, and the satellite device can implement operations of the access network device, the network entity, and the storage entity. In this case, a terminal device may send a request for a core network service to the satellite, and the satellite determines a corresponding operation sequence based on the request for the core network service.

In a possible implementation, a first satellite receives third request information from the terminal device, where the third request information is used to request a first core network service; and determines a first operation sequence based on the third request information, where the first operation sequence indicates at least one processing operation and an execution order of the at least one processing operation, and the first operation sequence is used to execute the first core network service.

The at least one processing operation includes at least one first processing operation and/or at least one second processing operation. For details, refer to the descriptions in the method 300. Details are not described again.

For another example, the first satellite may further send fourth request information to a second satellite, where the fourth request information is used to request the first core network service; receive the at least one second processing operation from the second satellite; and generate the first operation sequence based on the at least one first processing operation and the at least one second processing operation.

For another example, the first satellite may further send fifth request information to the second satellite, where the fifth request information is used to request the first core network service; and receive the first operation sequence from the second satellite, where the first operation sequence is an operation sequence generated by the second satellite based on the at least one second processing operation.

For the foregoing specific determining methods, refer to the method 500 and the method 600. Details are not described again.

The following describes an implementation of the architecture 400 applicable to a multi-satellite scenario.

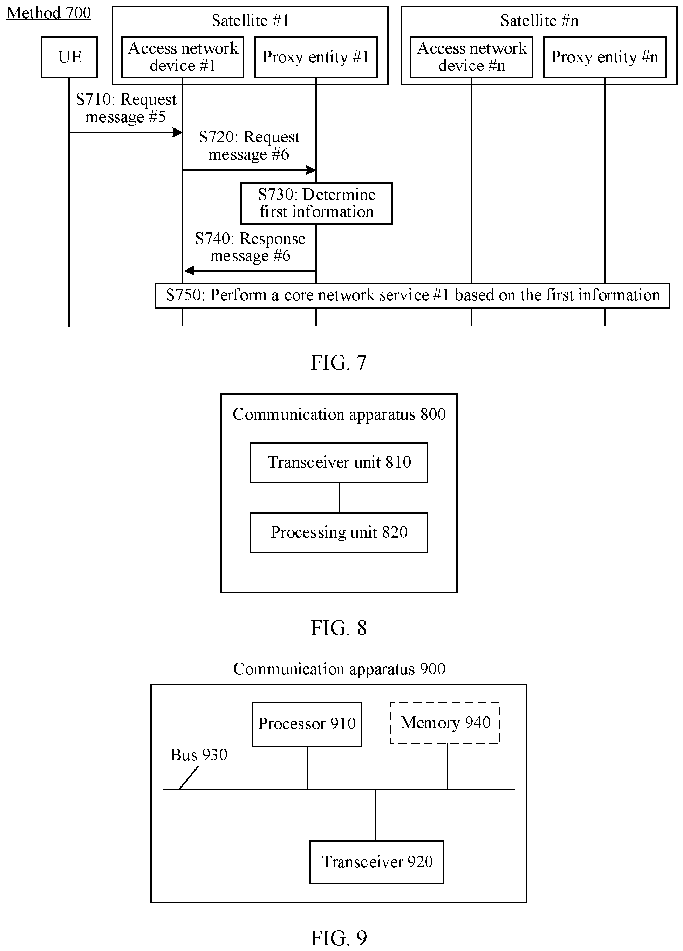

Refer to FIG. 7. For example, FIG. 7 is a schematic flowchart of a communication method 700 according to an embodiment of this application. For ease of description, the method 700 is described below by using interaction whose execution bodies are an access network device and a network entity as an example. It may be understood that the execution body of the method 700 may alternatively be a component (for example, a chip or a circuit) of the access network device or a component (for example, a chip or a circuit) of the network entity. This is not limited herein. Steps described below as being performed by a single execution body may alternatively be performed by a plurality of execution bodies. These execution bodies may be logically and/or physically separated.

In the method 700, an access network device #1 and a network entity #1 are deployed on a satellite #1, and an access network device #n and a network entity #n are deployed on a satellite #n. The satellite #n may include at least one of neighboring satellites of the satellite #1. For example, the satellite #n includes a satellite #2, a satellite #5, and a satellite #7. UE may communicate with a network through the access network device #1.

In addition, at least one processing operation #1 and/or at least one operation sequence #a may be deployed on the satellite #1, and at least one processing operation #n and/or at least one operation sequence #n may be deployed on the satellite #n.

In this application, a storage entity may be deployed on a satellite. The storage entity may be configured to store (or save) the at least one processing operation, or the storage entity may be further configured to store (or save) the at least one operation sequence. For example, a storage entity #1 is deployed on the satellite #1, and the storage entity #1 may store the at least one processing operation #1 and/or the at least one operation sequence #a; a storage entity #2 is deployed on the satellite #2, and the storage entity #2 may store at least one processing operation #2 and/or at least one operation sequence #b; a storage entity #3 is deployed on a satellite #3, and the storage entity #3 may store at least one processing operation #3 and/or at least one operation sequence #c; and so on.

The at least one processing operation #1 and the at least one processing operation #n may be partially the same, may be completely the same, or may be completely different. This is not limited in embodiments of this application.

The at least one operation sequence #1 and the at least one operation sequence #n may be partially the same, may be completely the same, or may be completely different. This is not limited in embodiments of this application.

For the processing operation #1 or the processing operation #n, refer to the descriptions in FIG. 3. Details are not described again.

For the operation sequence #1 or the operation sequence #n, refer to the descriptions in FIG. 3. Details are not described again.

The method 700 shown in FIG. 7 may include the following steps.

S710: The UE sends a request message #5 to the access network device #1.

The request message #5 is used to request a core network service #1 from the access network device #1.

The request message #1 may include identification information of the core network service #1 and context information of the UE.

The core network service #1 is used as an example of a first core network service. For details, refer to the descriptions in the method 500. Details are not described again.

S720: The access network device #1 sends a request message #6 to the network entity #1.

The access network device #1 sends the request message #6 to the network entity #1 based on the request message #5, where the request message #6 is used to request the network entity #1 to determine an operation sequence for performing the core network service #1.

The request message #6 may include the identification information of the core network service #1 and the context information of the UE.

S730: The network entity #1 determines first information.

In a possible implementation, the network entity #1 may allocate an index #1 to the core network service #1 based on the identification information of the core network service #1, and determine at least one processing operation for performing the core network service #1 and an operation execution order (an operation sequence #1).

Optionally, the network entity #1 may further determine an access network device execution sequence (denoted as an execution sequence #1). To be specific, processing operations in the operation sequence #1 need to be executed by a plurality of access network devices deployed on a plurality of satellites in a specific order. For example, the operation sequence #1 includes eight processing operations. The access network device #1 may execute the first to the third processing operations, an access network device #2 may execute the fourth to the sixth processing operations, and an access network device #3 may execute the seventh and the eighth processing operations.

The index #1 identifies or indicates a core network service, for example, a registration function, an authorization function, or a session setup function.

For a method for determining the operation sequence #1, refer to step S530. Details are not described again.

The processing operations in the operation sequence #1 may include a processing operation deployed on at least one of the satellite #1 and the satellite #n.

For example, based on the core network service #1, the network entity #1 may determine that a processing operation #a on the satellite #1, a processing operation #b on the satellite #2, and a processing operation #3 on the satellite #5 can implement the core network service #1, and the network entity #1 may further determine an execution order of the processing operation #a, the processing operation #b, and the processing operation #c, to determine the operation sequence #1.

It may be understood that the network entity #1 may determine the operation sequence #1 based on a processing operation #1 locally deployed on the network entity #1 and a processing operation #n deployed on another satellite.

It may be understood that the network entity #1 may exchange, through a B2 interface, a processing operation locally associated with each network entity.

Further, the network entity #1 encapsulates the index #1, the operation sequence #1, the execution sequence #1, and the context information of the UE to obtain the first information.

It should be noted that when the first information does not include the execution sequence #1, the access network device may determine a next-hop node based on a local capability of the access network device, and send the first information to the next access network device to execute a corresponding processing operation.

S740: The network entity #1 sends a response message #6 to the access network device #1.

The response message #6 includes the first information.

S750: The access network device #1 and the access network device #n perform the core network service #1 based on the first information.

The access network device #1 may determine, based on the execution sequence #1 in the first information, at least one processing operation that can be executed locally by the access network device #1.

After the access network device #1 executes the corresponding processing operation and processes a context of the UE, the network entity #1 re-encapsulates processing operations that are not executed (denoted as an operation sequence #2) in the operation sequence #1 and a processed context of the UE, to obtain second information.

The access network device #1 may further determine a next-hop node (for example, the access network device #2) based on the execution sequence #1 in the first information.

The network entity #1 sends the second information to a network entity #2; the access network device #2 continues to execute a corresponding processing operation and process the context of the UE; the network entity #2 re-encapsulates remaining processing operations that are not executed and a processed context of the UE to obtain third information, and sends the third information to a next node for further processing; and so on. Until all the processing operations in the operation sequence #1 are executed, the core network service #1 is completed.

It may be understood that when the first information does not include the execution sequence #1, each access network device may determine a next hop based on local information, and send the first information to the next hop until the core network service #1 is completed.

In this technical solution, it is considered that a single satellite cannot complete a complete core network operation, and a core network capability of another satellite is needed for coordination. In a multi-satellite collaboration scenario, a core network entity may be deployed on a satellite. The core network entity may determine, based on a core network service requested by a terminal device, one or more processing operations that need to be executed and an order of the processing operations, and encapsulate the one or more processing operations and the order together with context information of the terminal device, to indicate an access network device deployed on each satellite to execute a corresponding processing operation and process a context of the terminal device, until the core network service is completed. It is considered that a payload capability of the satellite is limited. The network entity is deployed to replace different core network elements, thereby reducing deployment complexity of a satellite-borne core network. In addition, even if the multi-satellite collaboration scenario still exists in this solution, each satellite processing node encapsulates a current context of the terminal device. Encapsulated data exchanged between inter-satellite network entities includes control information of a processing operation that needs to be executed, and core network data that needs to be processed, namely, the context information of the terminal device. Even if a satellite network topology is unstable, context migration is not needed. It only needs to send a currently encapsulated data packet to a next processing node (a next satellite), so that current context information of the terminal device and processing progress can be determined. In this way, communication latency is reduced, and quality of service is improved.

In this application, an access network device, a network entity, and a storage entity may be coupled to a satellite device. In other words, the access network device, the network entity, and the storage entity may be implemented inside a satellite, and the satellite device can implement operations of the access network device, the network entity, and the storage entity. In this case, a terminal device may send a request for a core network service to the satellite, and the satellite determines, based on the request for the core network service, a corresponding operation sequence for performing the core network service and each satellite node. For a specific method, refer to the foregoing method 700. Details are not described again.

It should be understood that another possible implementation of this embodiment of this application is similar to that of the method 600 or the method 700. For details, refer to the descriptions in the method 600 or the method 700. Details are not described herein again.

It should be understood that sequence numbers of the foregoing processes do not mean an execution order. The execution order of the processes should be determined based on functions and internal logic of the processes, and should not be construed as any limitation on implementation processes of embodiments of this application.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

The methods provided in embodiments of this application are described above in detail with reference to FIG. 3 to FIG. 7. The following describes in detail apparatuses provided in embodiments of this application with reference to FIG. 8 and FIG. 9. It should be understood that descriptions of apparatus embodiments correspond to the descriptions of the method embodiments. Therefore, for content not described in detail, refer to the foregoing method embodiments. For brevity, details are not described herein again.

FIG. 8 is a diagram of a structure of a communication apparatus according to an embodiment of this application.

The apparatus 800 includes a transceiver unit 810 and a processing unit 820. The transceiver unit 810 may be configured to implement a corresponding communication function. The processing unit 820 may be configured to perform data processing.

Optionally, the transceiver unit 810 may also be referred to as a communication interface or a communication unit, and includes a sending unit and/or a receiving unit. The transceiver unit 810 may be a transceiver (including a transmitter and/or a receiver), an input/output interface (including an input interface and/or an output interface), a pin, a circuit, or the like. The transceiver unit 810 may be configured to perform a sending step and/or a receiving step in the foregoing method embodiments.

Optionally, the processing unit 820 may be a processor (which may include one or more processors), a processing circuit having a processor function, or the like, and may be configured to perform a step other than the sending and receiving steps in the foregoing method embodiments.

Optionally, the apparatus 800 further includes a storage unit. The storage unit may be a memory, an internal storage unit (for example, a register or a cache), an external storage unit (for example, a read-only memory or a random access memory), or the like. The storage unit is configured to store instructions. The processing unit 820 executes the instructions stored in the storage unit, to cause the communication apparatus to perform the foregoing method.

In a design, the apparatus 800 may be configured to perform an action performed by the first access network device in the foregoing method embodiments. For example, the apparatus 800 may be configured to perform an action performed by the first access network device in the foregoing method 500. In this case, the apparatus 800 may be a component of the first access network device. The transceiver unit 810 is configured to perform a receiving/sending-related operation on a first access network device side in the foregoing method embodiments. The processing unit 820 is configured to perform a processing-related operation of the first access network device in the foregoing method embodiments.

For example, the transceiver unit 810 is configured to receive first request information, where the first request information is used to request a first core network service. The processing unit 820 is configured to send second request information to a first network entity based on the first request information, where the second request information is used to request a first operation sequence, the first operation sequence indicates at least one processing operation and an execution order of the at least one processing operation, the first operation sequence is used to implement the first core network service, and the first network entity is deployed on a first satellite or a second satellite.

For another example, the transceiver unit 810 is further configured to receive the first operation sequence.

For another example, the processing unit 820 is further configured to execute the at least one first processing operation and/or the at least one second processing operation based on the first operation sequence.

For another example, the transceiver unit 810 is further configured to send a first message, where the first message indicates at least one processing operation or operation sequence associated with the first access network device and/or at least one processing operation or operation sequence associated with a third access network device, and the third access network device is deployed on a third satellite.

For another example, the transceiver unit 810 is further configured to send a second message, where the second message indicates load processing information of the first access network device and/or load processing information of the third access network device, and the third access network device is deployed on the third satellite.

It should be understood that the transceiver unit 810 and the processing unit 820 may further perform other operations performed by the first access network device in the method 500. Details are not described herein again.

In a design, the apparatus 800 may be configured to perform an action performed by the first network entity in the foregoing method embodiments. For example, the apparatus 800 may be configured to perform an action performed by the first network entity in the method 500. In this case, the apparatus 800 may be a component of the first network entity. The transceiver unit 810 is configured to perform a receiving/sending-related operation on a first network entity side in the foregoing method embodiments. The processing unit 820 is configured to perform a processing-related operation of the first network entity in the foregoing method embodiments.

For example, the transceiver unit 810 is configured to receive second request information, where the second request information is used to request a first operation sequence. The processing unit 820 is configured to determine the first operation sequence based on the second request information, where the first operation sequence indicates at least one processing operation and an execution order of the at least one processing operation, the first operation sequence is used to implement a first core network service, and the first network entity is deployed on a first satellite.

For another example, the transceiver unit 810 is further configured to receive the second request information from a first access network device or a second access network device, where the first access network device is deployed on the first satellite, and the second access network device is deployed on the second satellite.

For another example, the processing unit 820 is further configured to generate the first operation sequence based on at least one first processing operation and/or at least one second processing operation, where the at least one first processing operation is deployed on the first satellite, and the at least one second processing operation is deployed on the second satellite.

For another example, the transceiver unit 810 is further configured to receive the at least one second processing operation from a second network entity, where the second network entity is deployed on the second satellite. The processing unit 820 is further configured to generate the first operation sequence based on the at least one first processing operation and the at least one second processing operation.

For another example, the transceiver unit 810 is further configured to receive the at least one first processing operation from a second network entity, where the second network entity is deployed on the first satellite. The processing unit 820 is further configured to generate the first operation sequence based on the at least one first processing operation and the at least one second processing operation.

For another example, the processing unit 820 is further configured to determine the first operation sequence based on the at least one operation sequence.

For another example, the transceiver unit 810 is further configured to send the first operation sequence.

It should be understood that the transceiver unit 810 and the processing unit 820 may further perform other operations performed by the first network entity in the method 500. Details are not described herein again.

In a design, the apparatus 800 may be configured to perform an action performed by the first satellite in the foregoing method embodiments. For example, the apparatus 800 may be configured to perform an action performed by the first satellite in the method 500. In this case, the apparatus 800 may be a component of the first satellite. The transceiver unit 810 is configured to perform a receiving/sending-related operation on a first satellite side in the foregoing method embodiments. The processing unit 820 is configured to perform a processing-related operation of the first satellite in the foregoing method embodiments.

For example, the transceiver unit 810 is configured to receive third request information, where the third request information is used to request a first core network service. The processing unit 820 is configured to determine a first operation sequence based on the third request information, where the first operation sequence indicates at least one processing operation and an execution order of the at least one processing operation, and the first operation sequence is used to implement the first core network service.

For another example, the processing unit 820 is further configured to generate the first operation sequence based on at least one first processing operation and/or at least one second processing operation, where the at least one first processing operation is deployed on the first satellite, and the at least one second processing operation is deployed on the second satellite.

For another example, the transceiver unit 810 is further configured to send fourth request information to the second satellite, where the fourth request information is used to request the first core network service; the transceiver unit 810 is further configured to receive the at least one second processing operation; and the processing unit 820 is further configured to generate the first operation sequence based on the at least one first processing operation and the at least one second processing operation.

For another example, the transceiver unit 810 is further configured to send fifth request information to the second satellite, where the fifth request information is used to request the first core network service; and the transceiver unit is further configured to receive the first operation sequence, where the first operation sequence is an operation sequence generated by the second satellite based on the at least one second processing operation.

It should be understood that the transceiver unit 810 and the processing unit 820 may further perform other operations performed by the first satellite in the method 500. Details are not described herein again.

It should be further understood that the apparatus 800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the network device in the foregoing embodiments, and may be configured to perform procedures and/or steps corresponding to the network device in the foregoing method embodiments. To avoid repetition, details are not described herein again.

The apparatus 700 in the foregoing solutions has a function of implementing a corresponding step performed by the device in the foregoing methods, or the apparatus 700 in the foregoing solutions has a function of implementing a corresponding step performed by the network device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit 710 may alternatively be a transceiver circuit (for example, may include a receiver circuit and a transmitter circuit), and the processing unit may be a processing circuit.

It should be noted that the apparatus in FIG. 7 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 9 is a diagram of a communication architecture according to an embodiment of this application. The communication apparatus 900 shown in FIG. 9 includes a processor 910 and a transceiver 920. Optionally, the processor 910 and the transceiver 920 may be connected to each other through a bus 930. The communication apparatus 900 may be a terminal device or a network device.

Optionally, the communication apparatus 900 may further include a memory 940. The memory 940 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 940 is configured to store related instructions and data.

The processor 910 is coupled to the memory 940, and is configured to execute the instructions stored in the memory 940, to control the transceiver 920 to send a signal and/or receive a signal.

It should be understood that the processor 910 and the memory 940 may be combined into one processing apparatus, and the processor 910 is configured to execute program code stored in the memory 940 to implement the foregoing functions. During specific implementation, the memory 940 may alternatively be integrated in the processor 910, or may be independent of the processor 910. It should be understood that the processor 910 may alternatively correspond to each processing unit in the foregoing communication apparatus, and the transceiver 920 may correspond to each receiving unit and sending unit in the foregoing communication apparatus.

It should be further understood that the transceiver 920 may include a receiver (or referred to as a receiver machine) and a transmitter (or referred to as a transmitter machine). The transceiver may further include an antenna, and a quantity of antennas may be one or more. The transceiver may alternatively be a communication interface or an interface circuit.

Specifically, the communication apparatus 900 may correspond to the first access network device in the method 600 according to embodiments of this application. The communication apparatus 900 may include units for performing the method performed by the first access network device in the method 400. It should be understood that a specific process in which the units perform the foregoing corresponding steps is described in detail in the foregoing method embodiments. For brevity, details are not described herein again.

Specifically, the communication apparatus 900 may correspond to the first network entity in the method 600 according to embodiments of this application. The communication apparatus 900 may include units for performing the method performed by the first network entity in the method 400. It should be understood that a specific process in which the units perform the foregoing corresponding steps is described in detail in the foregoing method embodiments. For brevity, details are not described herein again.

When the communication apparatus 900 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logic circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor can implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions in any one of the foregoing method embodiments are implemented.

This application further provides a computer program product. When the computer program product is executed by a computer, functions in any one of the foregoing method embodiments are implemented.

All or some of the foregoing embodiments may be implemented by using software, hardware, firmware, or any combination thereof. When software is used to implement the methods, all or some of the methods may be implemented in a form of a computer program product. The computer program product includes one or more computer instructions. When the computer instructions are loaded and executed on a computer, all or some of the procedures or functions described in embodiments of this application are produced. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the term "example", "for example", or the like is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that in various embodiments of this application, sequence numbers of the foregoing processes do not mean an execution order. The execution order of the processes should be determined based on functions and internal logic of the processes, and should not be construed as any limitation on implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification is merely an association relationship for describing associated objects, and indicates that three relationships may exist. For example, A and/or B may indicate the following three cases: Only A exists, both A and B exist, and only B exists.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that, in embodiments of this application, terms "include", "comprise", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, the numbers are used for distinguishing between different information.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first access network device, wherein the first access network device is deployed on a first satellite, and the method comprises:
receiving first request information, wherein the first request information is used to request a first core network service; and
sending second request information to a first network entity based on the first request information, wherein the second request information is used to request a first operation sequence, the first operation sequence indicates at least one processing operation and an execution order of the at least one processing operation, the first operation sequence is used to implement the first core network service, and the first network entity is deployed on the first satellite or a second satellite.

2. The method according to claim 1, wherein the method further comprises:
receiving the first operation sequence.

3. The method according to claim 1 or 2, wherein
the at least one processing operation comprises at least one first processing operation and/or at least one second processing operation, the at least one first processing operation is deployed on the first satellite, and the at least one second processing operation is deployed on the second satellite.

4. The method according to any one of claims 1 to 3, wherein the method further comprises: executing the at least one processing operation based on the first operation sequence.

5. The method according to any one of claims 1 to 4, wherein the method further comprises:
sending a first message, wherein the first message indicates at least one processing operation or operation sequence associated with the first access network device and/or at least one processing operation or operation sequence associated with a third access network device, and the third access network device is deployed on a third satellite.

6. The method according to any one of claims 1 to 5, wherein the method further comprises:
sending a second message, wherein the second message indicates load processing information of the first access network device and/or load processing information of the third access network device, and the third access network device is deployed on the third satellite.

7. A communication method, applied to a first network entity, wherein the method comprises:
receiving second request information, wherein the second request information is used to request a first operation sequence; and
determining the first operation sequence based on the second request information, wherein the first operation sequence indicates at least one processing operation and an execution order of the at least one processing operation, the first operation sequence is used to implement a first core network service, and the first network entity is deployed on a first satellite.

8. The method according to claim 7, wherein the receiving the second request information comprises:
receiving the second request information from a first access network device or a second access network device, wherein the first access network device is deployed on the first satellite, and the second access network device is deployed on a second satellite.

9. The method according to claim 7 or 8, wherein
the at least one processing operation comprises at least one first processing operation and/or at least one second processing operation, the at least one first processing operation is deployed on the first satellite, and the at least one second processing operation is deployed on the second satellite.

10. The method according to claim 9, wherein the method further comprises:
receiving the at least one second processing operation from a second network entity, wherein the second network entity is deployed on the second satellite; and
generating the first operation sequence based on the at least one first processing operation and the at least one second processing operation.

11. The method according to claim 7 or 8, wherein at least one operation sequence is deployed on the first satellite or the second satellite, and the determining the first operation sequence based on the second request information comprises:
determining the first operation sequence based on the at least one operation sequence.

12. The method according to any one of claims 7 to 11, wherein the method further comprises: sending the first operation sequence.

13. A communication method, applied to a first satellite, wherein the method comprises:
receiving third request information, wherein the third request information is used to request a first core network service; and
determining a first operation sequence based on the third request information, wherein the first operation sequence indicates at least one processing operation and an execution order of the at least one processing operation, and the first operation sequence is used to implement the first core network service.

14. The method according to claim 13, wherein
the at least one processing operation comprises at least one first processing operation and/or at least one second processing operation, the at least one first processing operation is deployed on the first satellite, and the at least one second processing operation is deployed on the second satellite.

15. The method according to claim 14, wherein the method further comprises:
sending fourth request information to the second satellite, wherein the fourth request information is used to request the first core network service;
receiving the at least one second processing operation; and
generating the first operation sequence based on the at least one first processing operation and the at least one second processing operation.

16. The method according to claim 15, wherein the method further comprises:
sending fifth request information to the second satellite, wherein the fifth request information is used to request the first core network service; and
receiving the first operation sequence, wherein the first operation sequence is an operation sequence generated by the second satellite based on the at least one second processing operation.

17. A communication apparatus, comprising a unit configured to perform the method according to any one of claims 1 to 6, 7 to 12, or 13 to 16.

18. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 6, the method according to any one of claims 7 to 12, or the method according to any one of claims 13 to 16.

19. A computer-readable storage medium, wherein the computer-readable storage medium stores a computer program or instructions, and when the computer program or the instructions are run on a computer, the computer is caused to perform the method according to any one of claims 1 to 6, the method according to any one of claims 7 to 12, or the method according to any one of claims 13 to 16.

20. A chip system, comprising a processor configured to invoke a computer program from a memory and run the computer program, to cause a communication device in which the chip system is installed to perform the method according to any one of claims 1 to 6, the method according to any one of claims 7 to 12, or the method according to any one of claims 13 to 16.

21. A computer program product, wherein when the computer program product is run on a computer, the computer is caused to perform a step in the method according to any one of claims 1 to 6, a step in the method according to any one of claims 7 to 12, or a step in the method according to any one of claims 13 to 16.
